# EUROPÄISCHE PATENTSCHRIFT

(11) **EP 0 745 509 B1**
(45) Veröffentlichungstag und Bekanntmachung des Hinweises auf die Patenterteilung: **14.07.1999**
(21) Anmeldenummer: 96102834.7
(22) Anmeldetag: 26.02.1996
(51) Int. Cl.: B60N 2/48, B60N 2/44

(54) **Polsterkörper, insbesondere für eine Kraftfahrzeugkopfstütze**
Upholstered body, in particular for motor vehicle headrests
Elément rembourré, en particulier pour appui-tête de véhicules automobiles

(30) Priorität: 03.05.1995 DE 19515743
(43) Veröffentlichungstag der Anmeldung: 04.12.1996
(73) Patentinhaber: GRAMMER Automotive GmbH, 92224 Amberg (DE)
(72) Erfinder: Schmautz, Karsten, 42655 Solingen (DE); Norbisrath , Klaus, 42489 Wülfrath (DE)
(74) Vertreter: Patentanwälte Ostriga & Sonnet

(56) Entgegenhaltungen:
- EP-A- 0 265 962
- EP-A- 0 267 503
- DE-A- 2 826 356
- DE-A- 3 736 828
- DE-C- 4 040 454

## Beschreibung

Die Erfindung betrifft einen Polsterkörper entsprechend dem Oberbegriff des Anspruchs 1. Ein solcher Polsterkörper, der für eine Kraftfahrzeugkopfstütze bestimmt ist, ist in der DE 28 26 356 A1 (s. dort Fig. 3) beschrieben. Beide miteinander zu verbindenden Längsränder des Polsterüberzuges weisen an der Überzuginnenfläche jeweils eine gesonderte versteifende Leiste auf, die aus einem Werkstoff gebildet ist, welcher eine wesentlich höhere Steifigkeit als der Polsterüberzug selbst aufweist. Jede Leiste ist an der Überzuginnenfläche durch Verkleben, Verschweißen, Nähen od. dgl. befestigt.

Zur Herstellung einer Verbindung werden beide Längsränder, deren Leisten voneinander abgewandt sind, quer in eine sich axial erstreckende spaltförmige Nutöffnung hindurch in den Nutinnenraum eines aus nachgiebigem Werkstoff bestehenden rohrartigen Nut-Verbindungsprofils eingeschoben, während der Polsterkörper zusammengedrückt wird. Die spaltförmige Nutöffnung ist von zwei einwärts in den Nutinnenraum weisenden, sich axial erstreckenden Hakenstegen begrenzt. Die freien Hakenstirnflächen der Hakenstege hintergreifen nun die von den Längsrändern weg rückwärts weisenden Leistenstirnflächen, sobald das Polster wieder entspannt wird und eine Zugkraft auf die Bezugsverbindung ausübt.

Der Vorteil des durch die DE 28 26 356 A1 bekannten Polsterkörpers besteht darin, daß die beiden miteinander zu verbindenden Bezugs-Längsränder relativ rasch und sicher unter Vermeidung von zuvor üblichen Zusatzarbeiten, insbesondere von aufwendigen Näharbeiten, aneinanderschließbar sind.

Ausgehend von dem vorbekannten Polsterkörper gemäß der DE 28 26 356 A1, liegt der Erfindung die Aufgabe zugrunde, die Längsrandverbindung universeller zu gestalten, insbesondere den Aufwand zur Herstellung einer Längsrand-Verbindung bei Bedarf noch weiter zu verringern.

Entsprechend der Erfindung wird diese Aufgabe dadurch gelöst, daß die beiden Hakenstege jeweils mittels einer sich entlang der Nutöffnung erstreckenden gelenkartigen Achse an der jeweils benachbarten Nutwand etwa klappenartig beweglich angeschlossen sind und daß die beiden Hakenstege vor dem Einschieben der beiden Längsränder, eine nach außen offene Zentrierrinne bildend, mit ihren freien Hakenstirnflächen gegeneinanderweisen.

Eine besonders bevorzugte Ausführungsform ist dadurch gekennzeichnet, daß jede Leiste durch Umschlagen eines Randabschnittes und dessen Befestigung an der Überzuginnenfläche gebildet ist.

Während die Hakenstege gemäß der DE 28 26 356 A1 stets einen offenen Nutspalt begrenzen, da sie relativ kurz ausgebildet und im übrigen fest an den benachbarten Nutwänden angeschlossen sind, sind entsprechend der Erfindung beide Hakenstege klappenartig beweglich an der jeweils benachbarten Nutwand angeschlossen.

Außerdem weisen die beiden erfindungsgemäßen Hakenstege eine solche Quererstreckung und Neigung auf, daß sie mit ihren freien Hakenstirnflächen gegeneinanderweisen oder gar mit ihren freien Hakenstirnflächen aneinanderliegen. Auf diese Weise können die beiden erfindungsgemäßen Hakenstege vor dem Einschieben der beiden Längsränder eine nach außen offene Zentrierrinne bilden, die ein automatisches Einbringen der Längsränder in das Nut-Verbindungsprofil hinein erleichtert. In diese offene Zentrierrinne werden die beiden Längsränder gemeinsam oder sukzessive nacheinander eingelegt und über die freien Hakenstirnflächen hinweg in den Nutinnenraum hineingeschoben, während der Polsterkörper zusammengedrückt wird. Sobald der Polsterkörper nach Herstellung der Längsrandverbindung wieder entlastet wird, bewirkt die Rückstellelastizität des Polsterkörpers einen kräftigen Zug auf beide Längsränder, während die beiden freien Hakenstirnflächen der klappenartig angelenkten Hakenstege nach Art von beweglichen Widerhaken jeweils eine Leistenstirnfläche hintergreifen.

Die leistenartige Verdickung des jeweiligen Längsrandes wird - wie vorerwähnt - entsprechend der Erfindung dadurch erzielt, daß jede Leiste durch Umschlagen eines Randabschnittes und dessen Befestigung an der Überzuginnenfläche gebildet ist. Die Befestigung kann beispielsweise durch wenig aufwendige Näharbeit oder durch eine Klebefuge gebildet sein.

Ein wesentlicher Vorteil des erfindungsgemäßen Polsterkörpers besteht darin, daß zur Herstellung der leistenartigen Längsränder separate leistenartige steife Zusatzteile nicht unbedingt erforderlich sind. Vielmehr machen es die beiden klappenartig angelenkten erfindungsgemäßen Hakenstege möglich, zur Herstellung jeweils einer leistenartigen Verdickung lediglich einen Randabschnitt des Polsterüberzuges umzuschlagen und an der Überzuginnenfläche zu befestigen. Selbstverständlich gestattet es das erfindungsgemäße Nut-Verbindungsprofil gleichermaßen, im Bedarfsfalle auch Längsränder zu verwenden, die, ähnlich wie beim Gegenstand der DE 28 26 356 A1, mit gesonderten Leistenelementen versehen sind.

Weitere Ausgestaltungen entsprechend der Erfindung sind den Unteransprüchen zu entnehmen.

In den Zeichnungen ist ein bevorzugtes Ausführungsbeispiel entsprechend der Erfindung näher dargestellt, es zeigt
Fig. 1 eine mehr schematische Seitenansicht einer einen Polsterkörper tragenden Kraftfahrzeugkopfstütze, bei welcher eine Längsrandverbindung des Polsterüberzuges teilweise im Schnitt dargestellt ist,
Fig. 2 eine vergrößerte Darstellung des in Fig. 1 mit II gekennzeichneten Details und
Fig. 3 in Anlehnung an die Darstellung gemäß Fig. 2 die Herstellung einer Längsrandverbindung.

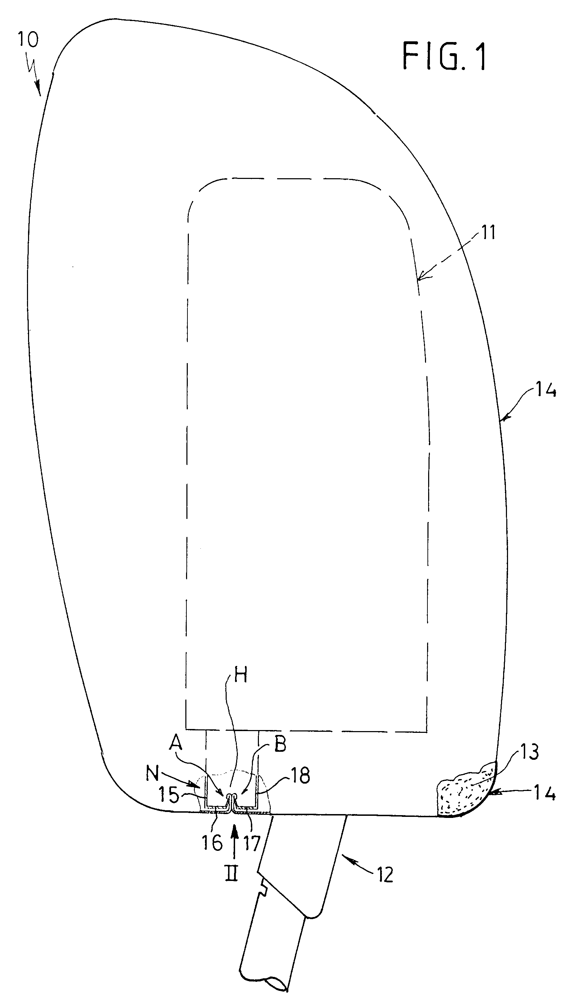

Die in Fig. 1 dargestellte Kopfstütze 10 für Kraftfahrzeugsitze weist einen gestrichelt angedeuteten Kopfpolsterträger 11 auf, welcher mittels einer Tragstangenanordnung 12 in nicht dargestellter Weise in der Sitzlehne eines Kraftfahrzeugsitzes gehalten ist.

Der Kopfpolsterträger 11 ist von einem Polster 13, beispielsweise von einem Schaumkörper, umgeben. Das Polster 13 wiederum ist allseitig von einem Polsterüberzug 14 umgeben, welcher zwei Längsränder A, B aufweist, die mittels eines Nutverbindungsprofils N miteinander verbunden sind.

Vor der Befestigung der beiden Längsränder A, B mittels des Nut-Verbindungsprofils N begrenzen die beiden Längsränder A und B eine Montageöffnung, die es gestattet, den gesamten Polsterüberzug 14 von oben her über das den Kopfpolsterträger 11 umschließende Polster 13 zu stülpen.

Das Nut-Verbindungsprofil N weist Nutwände 15, 16, 17 und 18 auf. Das Nut-Verbindungsprofil N ist zweckmäßig aus einem geeigneten Kunststoff als Kunststoffspritzgußteil gefertigt.

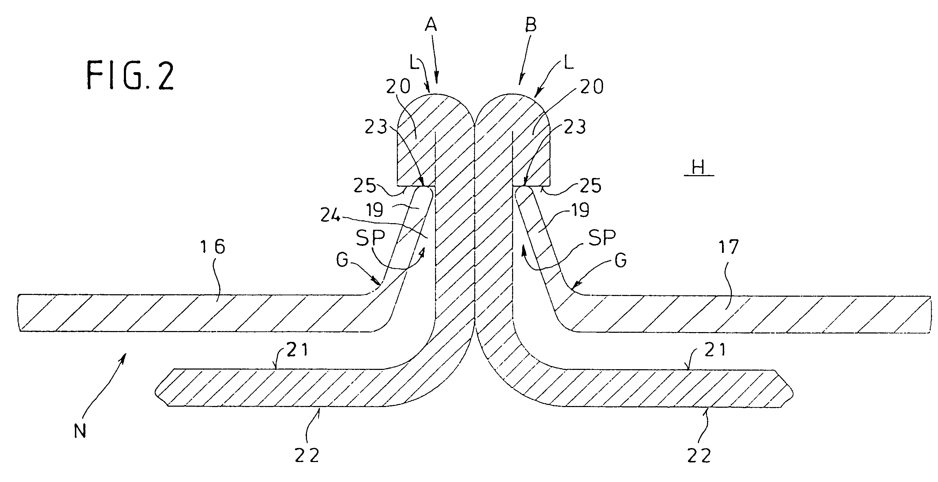

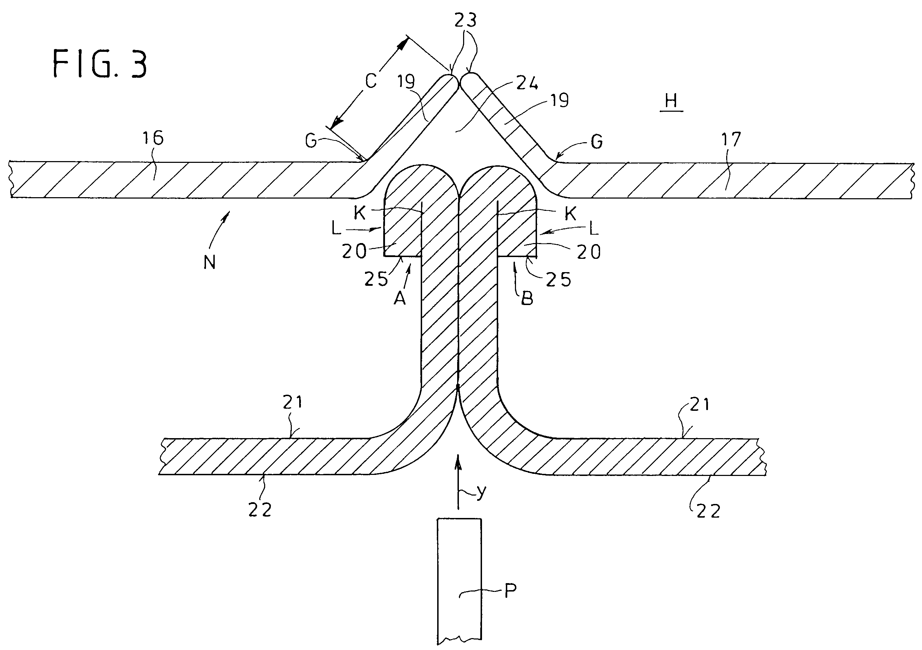

Aus den Fig. 2 und 3, die jeweils eine Detail-Vergrößerung entsprechend dem mit II bezeichneten Hinweispfeil in Fig. 1 darstellen, ist von den Nutwänden 16, 17 nur ein geringer Teil ersichtlich. Der von dem Nut-Verbindungsprofil N umschlossene Nutinnenraum ist mit H bezeichnet. Der Nutinnenraum H ist durch eine sich gemäß den Fig. 1 bis 3 axial in die Papierebene hinein erstreckende spaltförmige Nutöffnung SP hindurch zugänglich.

Entlang der Nutöffnung SP erstrecken sich etwa klappenartige Hakenstege 19, welche jeweils mittels einer sich entlang der Nutöffnung SP erstreckenden gelenkartigen Achse G an den benachbarten Nutwänden 16, 17 schwenkbeweglich angeschlossen sind.

Im Falle des gezeigten Ausführungsbeispiels sind die gelenkartigen Achsen G jeweils unter Beibehaltung einer stoffschlüssigen Verbindung zwischen den Hakenstegen 19 und den benachbarten Nutwänden 16, 17 dadurch gebildet, daß der Querschnitt der Hakenstege 19 wesentlich geringer ist als der Querschnitt der benachbarten Nutwände 16, 17. Es ist gleichfalls möglich, daß die gelenkartigen Achsen G in nicht dargestellter Weise durch eine filmartige Querschnittsverringerung, also durch einen filmscharnierartigen Anguß, dargestellt sind. Die Gelenkachsen G sind also Biegestellen, die eine Schwenkbeweglichkeit der Hakenstege 19 ermöglichen.

Beide Hakenstege 19 drücken rückstellelastisch gegeneinander, wie Fig. 3 (Darstellung vor dem Einschieben der beiden Längsränder A, B) zeigt.

Die Längsränder A, B des Polsterüberzuges 14 weisen jeweils eine Leiste L auf, die durch Umschlagen eines Randabschnittes 20 und dessen Befestigung an der Überzuginnenfläche gebildet ist. Die Überzugaußenfläche ist mit der Bezugsziffer 22 versehen.

Die quer zur Axialrichtung der Anordnung gemessene Breite C jedes Hakenstegs 19 ist so groß, daß beide Hakenstege 19, wenn deren freie Hakenstirnflächen 23 gemäß Fig. 3 aneinanderliegen, eine nach außen offene V-förmige Zentrierrinne 24 bilden. In diese können beide Längsränder A, B gemeinsam oder sukzessive aufeinanderfolgend eingelegt und mittels einer etwa plattenartigen Einschiebevorrichtung P in Richtung des mit y bezeichneten Pfeiles in den Nutinnenraum H hineingeschoben werden. Hierbei spreizen sich die beiden klappenartigen Hakenstege 19 auseinander und unter- bzw. hintergreifen sodann mit ihren freien Hakenstirnflächen 23 die Leistenstirnflächen 25 der beiden Leisten L.

Die Befestigung der Randabschnitte 20 an der Überzuginnenfläche 21 kann in nicht dargestellter Weise entweder durch mindestens eine Naht oder durch eine Klebefuge K bewerkstelligt werden.

## Patentansprüche

1. Polsterkörper, insbesondere für eine Kraftfahrzeugkopfstütze (10), mit einem ein Polster (13) umspannenden Polsterüberzug (14), dessen miteinander zu verbindenden beiden Längsränder (A, B) jeweils an der Überzuginnenfläche (21) eine etwa nach Art einer Leiste (L) ausgebildete Verdickung darstellen, wobei beide Längsränder (A, B), deren Leisten (L) einander abgewandt sind, durch eine sich axial erstreckende spaltförmige Nutöffnung (SP) hindurch in den Nutinnenraum (H) eines aus nachgiebigem Werkstoff bestehenden Nut-Verbindungsprofils (N) eingeschoben sind, dessen Nutöffnung (SP) von zwei einwärts in den Nutinnenraum (H) weisenden, sich axial erstreckenden Hakenstegen (19) begrenzt ist, deren freie Hakenstirnflächen (23) jeweils eine vom Längsrand (A, B) weg rückwärts weisende Leistenstirnfläche (25) hintergreifen, dadurch gekennzeichnet, daß die beiden Hakenstege (19) jeweils mittels einer sich entlang der Nutöffnung (SP) erstreckenden gelenkartigen Achse (G) an der jeweils benachbarten Nutwand (16, 17) etwa klappenartig beweglich angeschlossen sind, und daß die beiden Hakenstege (19) vor dem Einschieben der beiden leistenartig verdickten Längsränder (A, B), eine nach außen offene Zentrierrinne (24) bildend, mit ihren freien Hakenstirnflächen (23) gegeneinander weisen.

2. Polsterkörper nach Anspruch 1, dadurch gekennzeichnet, daß jede Leiste (L) durch Umschlagen eines Randabschnittes (20) des Polsterüberzugs (14) und dessen Befestigung an der Überzuginnenfläche (21) gebildet ist.

3. Polsterkörper nach Anspruch 1 oder nach Anspruch 2, dadurch gekennzeichnet, daß die beiden Hakenleisten (19) vor dem Einschieben der beiden Längsränder (A, B) in den Nutinnenraum (H), eine nach außen offene V-förmige Zentrierrinne (24) bildend, mit ihren freien Hakenstirnflächen (23) aneinanderliegen.

4. Polsterkörper nach einem der Ansprüche 1 bis 3, dadurch gekennzeichnet, daß die gelenkartige Achse (G) jeweils unter Beibehaltung einer stoffschlüssigen Verbindung zwischen Hakensteg (19) und benachbarter Nutwand (16, 17) durch Querschnittsverringerung gebildet ist.

5. Polsterkörper nach Anspruch 4, dadurch gekennzeichnet, daß die Hakenstege (19) auf ihrer quer zur Axialrichtung gemessenen gesamten Breite (C) einen wesentlich dünneren Querschnitt als die benachbarten Nutwände (16, 17) aufweisen.

6. Polsterkörper nach Anspruch 4, dadurch gekennzeichnet, daß die Hakenleisten (19) mittels eines Filmscharniers an der jeweils benachbarten Nutwand (16, 17) angeschlossen sind.

7. Polsterkörper nach einem der Ansprüche 1 bis 6, dadurch gekennzeichnet, daß die beiden Hakenstege (19) rückstellelastisch gegeneinander drücken.

8. Polsterkörper nach einem der Ansprüche 2 bis 7, dadurch gekennzeichnet, daß der Randabschnitt (20) mittels mindestens einer Naht an der Überzuginnenfläche (21) befestigt ist.

9. Polsterkörper nach einem der Ansprüche 1 bis 7, dadurch gekennzeichnet, daß der Randabschnitt (20) jeweils mittels einer Klebefuge (K) od. dgl. an der Überzuginnenfläche (21) befestigt ist.

## Claims

1. Upholstery element, in particular for a motor vehicle headrest (10), having an upholstery cover (14), which encloses a pad (13) and of which both longitudinal edges (A, B) to be connected to one another present in each case at the cover inner surface (21) a thickening designed substanbially in the manner of a bead (L), wherein both longitudinal edges (A, B), the beads (L) of which are remote from one another, are inserted through an axially extending, fissure-like groove aperture (SP) into the groove interior (H) of a groove-type connecting profile (N) made of compliant material, the groove aperture (SP) of which is delimited by two axially extending hook webs (19), which are directed inwards into the groove interior (H) and of which the free hook end faces (23) engage in each case behind a bead end face (25) directed backwards away from the longitudinal edge (A, B), characterized in that the two hook webs (19) are connected in each case by means of a joint-like axle (G), which extends along the groove aperture (SP), to the respective adjacent groove wall (16, 17) so as to be movable in a substantially flap-like manner, and that the two hook webs (19), prior to insertion of the two longitudinal edges (A, B) thickened in a bead-like manner, are directed with their free hook end faces (23) towards one another so as to form an outwardly open centring channel (24).

2. Upholstery element according to claim 1, characterized in that each bead (L) is formed by turning over an edge portion (20) of the upholstery cover (14) and fastening it to the cover inner surface (21).

3. Upholstery element according to claim 1 or according to claim 2, characterized in that the two hook strips (19), prior to insertion of the two longitudinal edges (A, B) into the groove interior (H), lie with their free hook end faces (23) against one another so as to form an outwardly open V-shaped centring channel (24).

4. Upholstery element according to one of claims 1 to 3, characterized in that the joint-like axle (G) is formed in each case by a cross-sectional reduction while retaining a cohesive connection between hook web (19) and adjacent groove wall (16, 17).

5. Upholstery element according to claim 4, characterized in that the hook webs (19), along their entire width (C) measured at right angles to the axial direction, have a much thinner cross section than the adjacent groove walls (16, 17).

6. Upholstery element according to claim 4, characterized in that the hook strips (19) are connected by means of a film hinge to the respective adjacent groove wall (16, 17).

7. Upholstery element according to one of claims 1 to 6, characterized in that the two hook webs (19) press resiliently against one another.

8. Upholstery element according to one of claims 2 to 7, characterized in that the edge portion (20) is fastened by means of at least one seam to the cover inner surface (21).

9. Upholstery element according to one of claims 1 to 7, characterized in that the edge portion (20) is fastened in each case by means of a glue joint (K) or the like to the cover inner surface (21).

## Revendications

1. Corps de rembourrage, en particulier pour un appuie-tête de véhicule automobile (10), avec un revêtement de rembourrage (14), recouvrant un coussin (13), dont les deux bords longitudinaux (A, B) à relier ensemble constituent chaque fois sur la face intérieure de revêtement (21) un épaississement réalisé à peu près à la façon d'une bande (L), les deux bords longitudinaux (A, B), dont les bandes (L) sont situées à l'opposé l'une de l'autre, étant insérés à travers une ouverture en rainure (SP) en forme d'intervalle, s'étendant axialement, dans l'espace intérieur en rainure (H) d'un profilé de liaison de rainure (N) réalisé en un matériau déformable, profilé dont l'ouverture de rainure (SP) est délimitée par deux nervures formant crochet (19) s'étendant axialement, tournées vers l'intérieur dans l'espace intérieur de rainure (H), nervures dont les faces frontales de crochet (23) libres saisissent chacune par l'arrière une face frontale de bande (25) orientée en s'écartant vers l'arrière de la bande longitudinale (A, B), caractérisé en ce que les deux nervures formant crochet (19) sont chacune raccordées de façon mobile, au moyen d'un axe (G) du genre d'une articulation, s'étendant le long de l'ouverture de rainure (SP), à la paroi de rainure (16, 17) chaque fois voisine, à peu près à la façon d'un clapet, et en ce que les deux nervures formant crochet (19), avant l'insertion des deux bords longitudinaux (A, B) épaissis à la façon d'une bande, se présentent avec leurs faces frontales de crochet (23) libres placées l'une contre l'autre, en constituant une goulotte de centrage (24) ouverte vers l'extérieur.

2. Corps de rembourrage selon la revendication 1, caractérisé en ce que chaque bande (L) est constituée par rabattement d'un tronçon de bordure (20) du revêtement de coussin (14) et de sa fixation sur la surface intérieure de revêtement (21).

3. Corps de rembourrage selon la revendication 1 ou selon la revendication 2, caractérisé en ce que les deux bandes formant crochet (19), avant l'insertion des deux bords longitudinaux (A, B) dans l'espace intérieur de rainure (H), appuient l'une sur l'autre par leurs faces frontales de crochet (23) libres, en constituant une goulotte de centrage (24) en forme de V, ouverte vers l'extérieur.

4. Corps de rembourrage selon l'une des revendications 1 à 3, caractérisé en ce que l'axe (G) du genre d'une articulation est chaque fois constitué en conservant une liaison par la matière entre la nervure formant crochet (19) et la paroi de rainure (16, 17) voisine, par une diminution de la section transversale.

5. Corps de rembourrage selon la revendication 4, caractérisé en ce que les nervures formant crochet (19) présentent sur leur largeur (C) globale, mesurée transversalement par rapport à la direction axiale, une section transversale sensiblement plus mince que les parois de rainures (16, 17) voisines.

6. Corps de rembourrage selon la revendication 4, caractérisé en ce que les bandes formant crochet (19) sont raccordées à la paroi de rainure (16, 17) chaque fois voisine, au moyen d'une charnière film.

7. Corps de rembourrage selon l'une des revendications 1 à 6, caractérisé en ce que les deux nervures formant crochet (19) pressent l'une contre l'autre avec une élasticité de rappel.

8. Corps de rembourrage selon l'une des revendications 2 à 7, caractérisé en ce que le tronçon de bordure (20) est fixé sur la surface intérieure de revêtement (21), au moyen d'au moins une couture.

9. Corps de rembourrage selon l'une des revendications 1 à 7, caractérisé en ce que le tronçon de bordure (20) est fixé sur la face intérieure de revêtement (21), chaque fois au moyen d'un joint adhésif (K) ou analogue.
